# EUROPÄISCHE PATENTSCHRIFT

(11) **EP 0 859 032 B1**
(45) Veröffentlichungstag und Bekanntmachung des Hinweises auf die Patenterteilung: **21.11.2001**
(21) Anmeldenummer: 98101695.9
(22) Anmeldetag: 02.02.1998
(51) Int. Cl.: C09B 1/28, C09B 1/26, C09B 1/42, C08K 5/18

(54) **Verbrückte Anthrachinone**
Bridged anthraquinones
Anthraquinones pontées

(30) Priorität: 13.02.1997 DE 19705389; 29.08.1997 DE 19737724
(43) Veröffentlichungstag der Anmeldung: 19.08.1998
(73) Patentinhaber: BAYER AG, 51368 Leverkusen (DE)
(72) Erfinder: Kalz, Dietmar, Dr., 53819 Neunkirchen (DE); Reinhardt, Karl-Heinz, 40789 Monheim (DE); Bläser, Helmut, 51465 Bergisch Gladbach (DE)

(56) Entgegenhaltungen:
- CH-A- 431 952
- DE-A- 2 541 663
- DE-B- 1 018 569
- FR-A- 1 103 231

## Beschreibung

Die Erfindung betrifft verbrückte Anthrachinone, Verfahren zu ihrer Herstellung sowie ihre Verwendung zum Massefärben von Kunststoffen.

N-substituierte 1-Aminoanthrachinone sind bereits bekannt. So ist das beispielsweise in DE-A-2 541 663 beschriebene 1-Cyclohexylaminoanthrachinon, sofern es zum Massefärben von Kunststoffen verwendet wird (s. FR-A 1 381 982), zwar thermostabil im Bereich von 220 bis 280°C und besitzt zudem eine gute Lichtechtheit, jedoch zeigt es noch Mängel in der Sublimierechtheit. Dies hat zur Folge, dass bei der zur Anwendung kommenden Verarbeitungstemperatur der Farbstoff sublimiert und die Spritzgussmaschine verschmutzt, so dass diese in aufwendiger Weise wieder gereinigt werden muss. Gemäß DE-B-1 018 569 und FR-A-1.103 231 werden Farbstoffe mit Sulfonsäure-haltigen Anthrachinonresten offenbart.

Es wurden nun verbrückte Anthrachinone der allgemeinen Formel (I) gefunden

R¹-NH-B-NH-R² (I),

worin
- R¹ und R²: unabhängig voneinander einen gegebenenfalls durch OH, gegebenenfalls substituiertes Amino, Aryloxy, insbesondere Phenyloxy, Halogen, insbesondere Cl, Br und F, Alkyl, insbesondere C₁-C₄-Alkyl oder Alkoxy wie C₁-C₄-Alkoxy, wobei jeder der Anthrachinonreste unabhängig voneinander substituiert ist, substituierten Rest der Formel 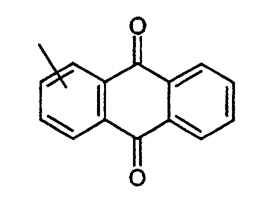 bedeuten und
- B: für ein gegebenenfalls substituiertes cycloalkylenhaltiges Brückenglied steht.

Die Anthrachinonreste können vorzugsweise durch 0 bis 4 gleiche oder verschiedene Reste substituiert sein. Vorzugsweise sind die Reste R¹ und R² gleich. Ganz besonders bevorzugt sind die Reste R¹ und R² unsubstituiert.

Bevorzugt sind verbrückte Anthrachinone der Formel (I), die der Formel (Ia) entsprechen 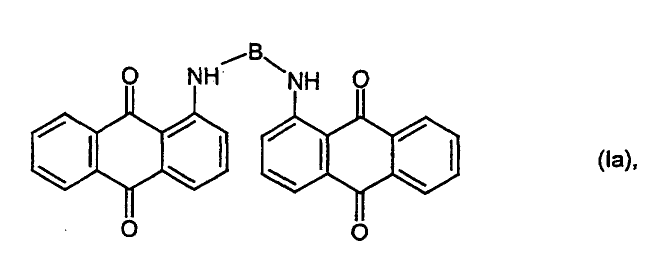 worin
- B: die oben angegebene Bedeutung besitzt.

Ebenfalls bevorzugt sind verbrückte Anthrachinone der Formel (I), die der Formel (Ib) entsprechen 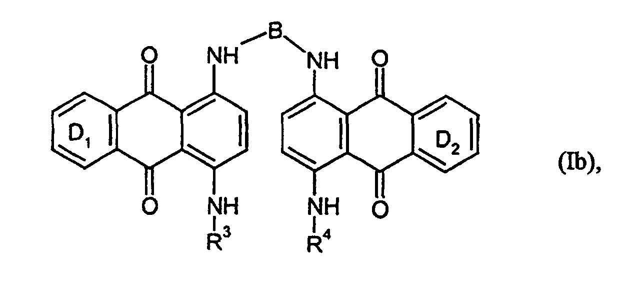 worin
- B: die oben angegebene Bedeutung besitzt,
- R³ und R⁴: unabhängig voneinander für Wasserstoff, gegebenenfalls substituiertes Alkyl, Aryl oder Aroyl stehen und
- die Ringe D₁ und D₂: unabhängig voneinander gegebenenfalls durch Halogen wie Cl, Br und F, C₁-C₄-Alkyl, wie Methyl und Ethyl oder Acylamino, wie Acetylamino substituiert sind.

Besonders bevorzugt sind Verbindungen der Formel (Ib), worin
- R³ und R⁴: unabhängig voneinander Wasserstoff, unsubstituiertes oder durch Halogen und/oder Phenyl substituiertes C₁-C₄-Alkyl, insbesondere Methyl, Ethyl und Phenylethyl, unsubstituiertes oder durch Halogen, insbesondere Cl, Br und F, Alkyl, insbesondere C₁-C₄-Alkyl, wie Methyl, Ethyl, n-Propyl, iso-Propyl, n-Butyl, sek.-Butyl, iso-Butyl und tert.-Butyl und/oder Acylamino, insbesondere Acetylamino, substituiertes Phenyl oder Benzoyl bedeuten.

In einer besonders bevorzugten Ausführungsform stehen die Reste R³ und R⁴ unabhängig voneinander fiir:
Wasserstoff, Phenyl, 4-Methylphenyl, Benzoyl und 4-Methylbenzoyl.

Vorzugsweise sind die Ringe D₁ und D₂ jedoch unsubstituiert.

Als mögliche Substituenten des Cycloalkylenrestes im Brückenglied B kommen beispielsweise C₁-C₄-Alkyl, insbesondere Methyl, Halogen, insbesondere Cl, Br oder F in Frage.

Als Cycloalkylen ist insbesondere C₅-C₇-Cycloalkylen, vorzugsweise Cyclopentylen und 1,3- oder 1,4-Cyclohexylen zu nennen.

Das Brückenglied B kann neben einer oder mehrerer gegebenenfalls substituierten Cycloalkylen-Einheiten auch noch andere Einheiten, vorzugsweise eine oder mehrere Alkyleneinheiten, insbesondere C₁-C₄-Alkyleneinheiten enthalten, wobei die Alkyleneinheiten linear oder verzweigt sein können.

Enthält das Brückenglied B sowohl Cycloalkylen als auch Alkyleneinheiten, so sind sie vorzugsweise nebeneinander angeordnet, insbesondere alternierend miteinander verbunden.

Bevorzugt sind Verbindungen der Formel (I), insbesondere der Formeln (Ia) und (Ib), deren Brückenglied B einem Rest der Formel (II) entspricht 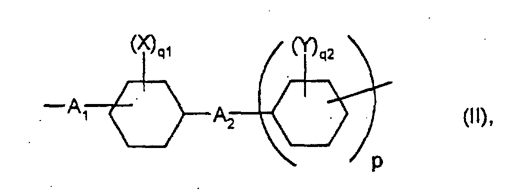 worin
- q1 und q2: unabhängig voneinander für eine Zahl von 0 bis 4 stehen,
- X und Y: unabhängig voneinander Alkyl, insbesondere C₁-C₄-Alkyl oder Halogen, insbesondere Cl, Br und F bedeuten, wobei für q1 größer oder gleich 2 X jeweils gleiche oder verschiedene Bedeutungen annehmen kann und für q2 größer oder gleich 3 Y jeweils gleiche oder verschiedene Bedeutungen annehmen kann,
- A₁: für einen linearen oder verzweigten C₁-C₄-Alkylenrest steht, insbesondere 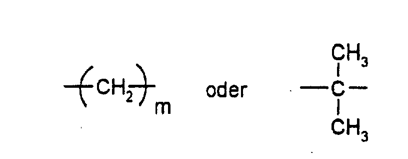 bedeutet,
- A2: für einen linearen oder verzweigten C₁-C₄-Alkylenrest steht, insbesondere 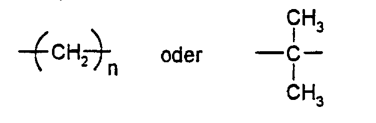 bedeutet,
wobei
- m und n: unabhängig voneinander für eine Zahl von 0 bis 4 stehen und
- p: 0 oder 1 bedeutet.

Besonders bevorzugte Verbindungen der Formel (I), insbesondere (Ia) und (Ib), sind solche, worin der oder die Cyclohexylenreste im Brückenglied unabhängig voneinander in 1,3- oder 1,4-Stellung verknüpft sind.

Ganz besonders bevorzugt sind Verbindungen der Formel (I), deren Brückenglied B einer der Formeln (IIa) bis (IIe) entspricht: 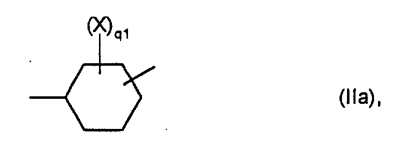 worin
- X und q1: die oben angegebene Bedeutung besitzen, vorzugsweise
- x: für Chlor oder Methyl steht und
- q1: für 0 oder 1 steht, 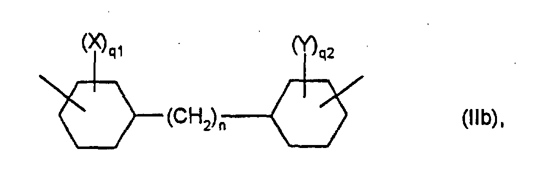
worin
- X, Y, q1, q2 und n: die oben angegebene Bedeutung besitzen, vorzugsweise
- X und Y: jeweils Methyl bedeuten,
- q1 und q2: unabhängig voneinander 0 oder 1 bedeuten und
- n: für 0 oder 1, insbesondere für 1 steht, 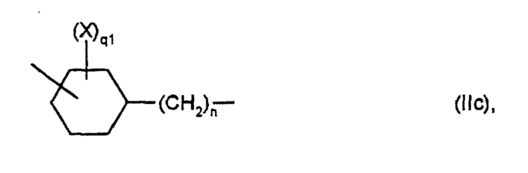
worin
- X, q1 und n: die oben angegebene Bedeutung besitzen, vorzugsweise
- x: für Methyl steht,
- q1: für 0, 1, 2 oder 3 steht, und
- n: für 1 steht, 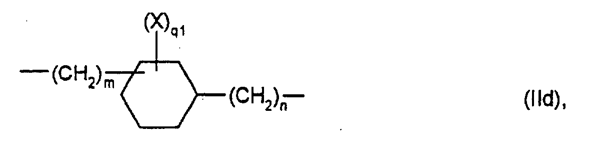
worin
- X, q1, m und n: die oben angegebene Bedeutung besitzen, vorzugsweise
- m und n: jeweils 1 bedeuten,
- x: Methyl bedeutet und
- q1: für 0 oder 1 steht, 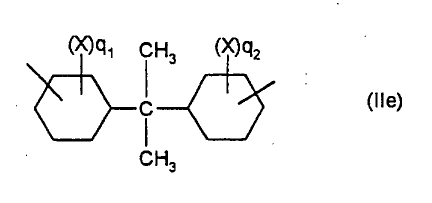
worin
- X, Y, q₁ und q₂: die oben angegebenen Bedeutungen besitzen, vorzugsweise
- X und Y: Methyl bedeuten und
- q₁ und q₂: unabhängig voneinander für 0 oder 1 stehen.

Als bevorzugte Brückenglieder der Formel (II) kommen beispielsweise die nachfolgenden in Frage:

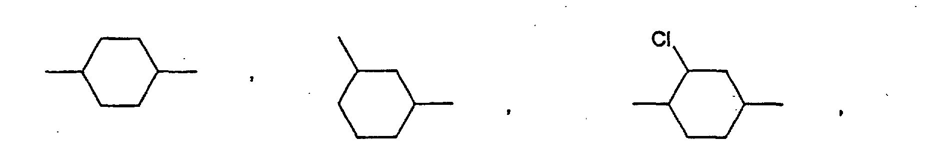

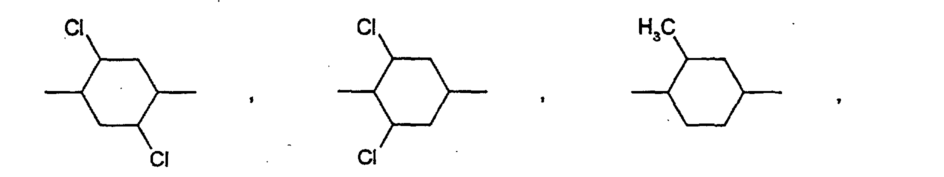

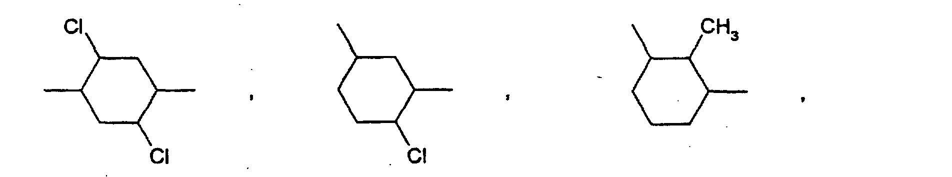

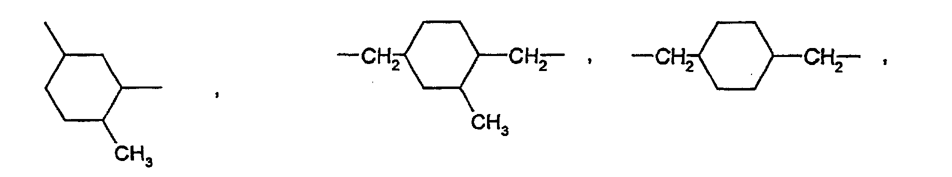

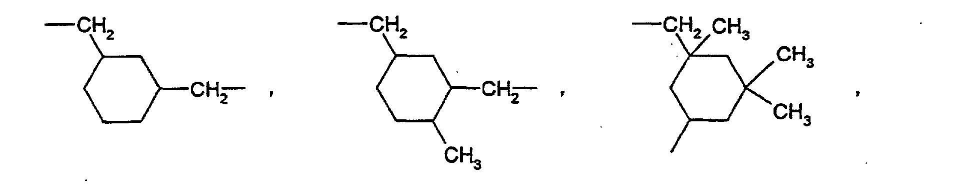

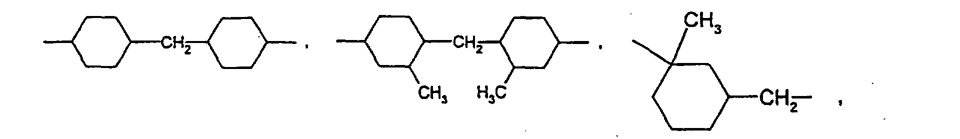

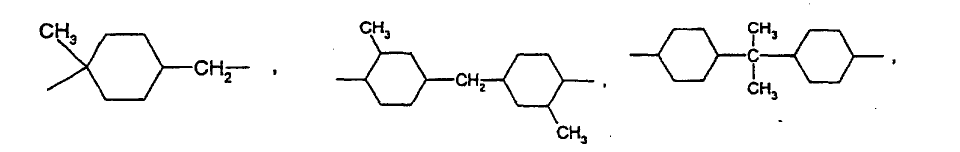

Die Erfindung betrifft weiterhin ein Verfahren zur Herstellung der Verbindungen der Formel (I), das dadurch gekennzeichnet ist, dass man gegebenenfalls durch OH, gegebenenfalls substituiertes Amino, Aryloxy, insbesondere Phenyloxy, Halogen, insbesondere Cl, Br und F, Alkyl, insbesondere C₁-C₄-Alkyl oder Alkoxy wie C₁-C₄-Alkoxy, wobei jeder der Anthrachinonreste unabhängig voneinander substituiert ist, substituierte Anthrachinonverbindungen der Formel (III) 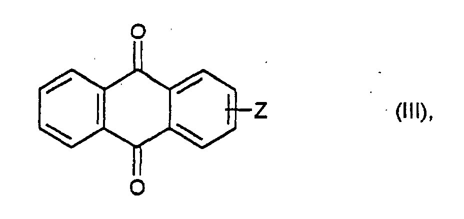 insbesondere solche der Formel (IIIa) 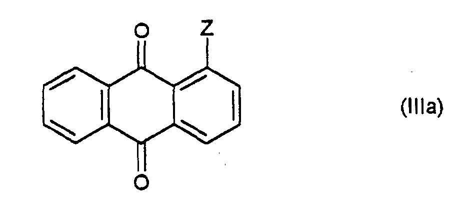 oder solche der Formel (IIIb1) und/oder der Formel (IIIb2) 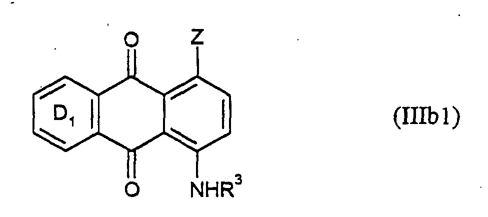 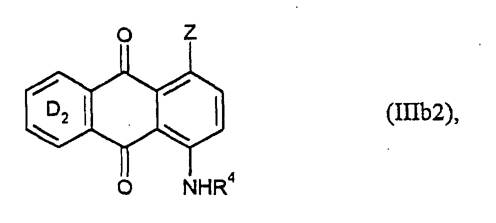 worin
- Z: für Cl, NO₂ oder SO₃M, mit M = Alkalimetall, insbesondere K oder Na, steht,
und
- D₁, D₂, R³ und R⁴: die oben angegebene Bedeutung haben,
mit einem Diamin der Formel (IV)

H₂N-B-NH₂ (IV),

worin
- B: die oben angegebene Bedeutung hat
bei einer Temperatur von 100 bis 180°C, gegebenenfalls in Gegenwart eines Lösungsmittels umsetzt.

Es ist bevorzugt, auf ein Mol der Verbindung (III) ½ Mol-Äquivalent der Verbindung der Formel (IV) einzusetzen. Es kann jedoch auch vorteilhaft sein, die Reaktanden in anderen als den stöchiometrischen Mengenverhältnissen einzusetzen. Insbesondere können Mischungen der Verbindung (III) eingesetzt werden, um beispielsweise Verbindungen der Formel (I) zu erhalten, in denen R¹ und R² unterschiedlich sind. Beispielsweise liegt bei Verwendung des Diamins (IV) gleichzeitig als Lösungsmittel dieses im Überschuß vor.

Bevorzugte Diamine der Formel (IV) sind solche, die die bevorzugten Brückenglieder B enthalten. Beispielsweise kommen in Frage:

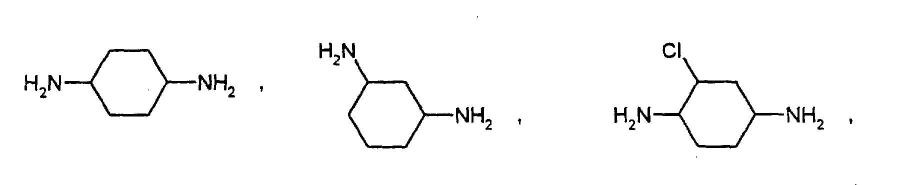

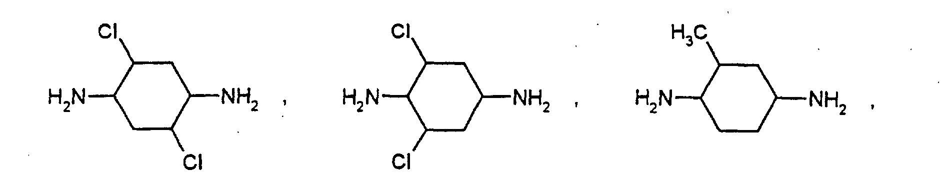

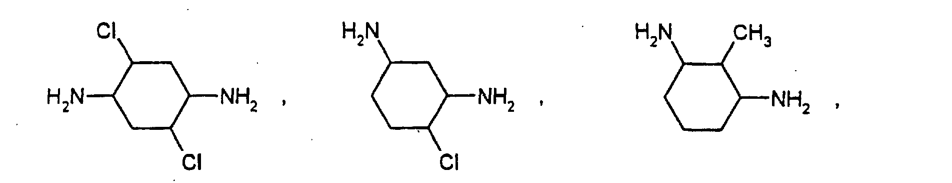

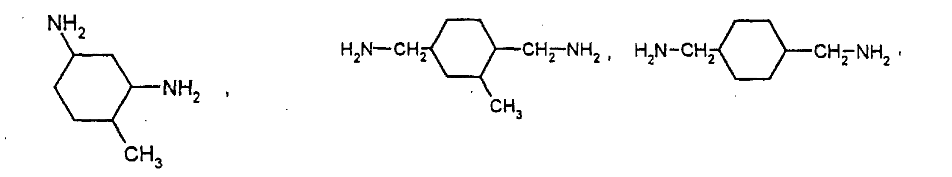

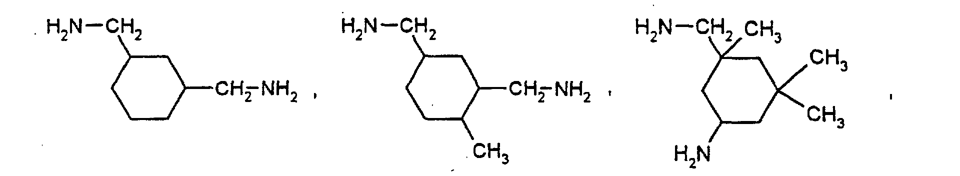

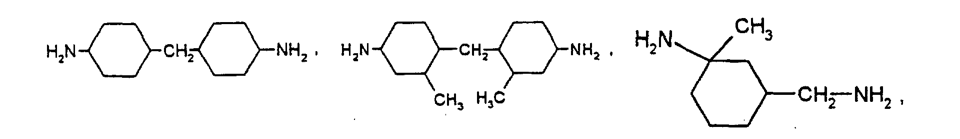

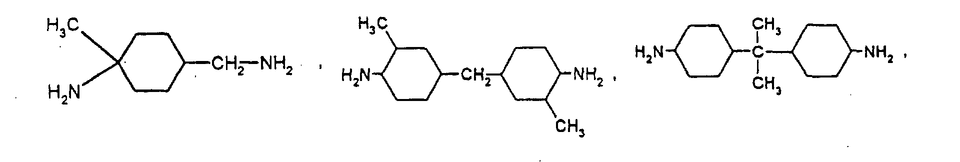

Das erfindungsgemäße Verfahren kann auch in Gegenwart von Katalysatoren durchgeführt werden. Als Katalysatoren kommen beispielsweise in Frage: Kupferpulver, Kupfer(I)chlorid, Kupfer(II)acetat, Kupfer(II)sulfat oder Kupferbronzepulver.

Als geeignete Lösungsmittel kommen beispielsweise Wasser und/oder organische Lösungsmittel in Frage. Als organische Lösungsmittel können beispielsweise genannt werden: gegebenenfalls halogenierte Aromaten wie o-Dichlorbenzol, Nitrobenzol, N-Methylpyrrolidon (NMP), Dimethylformamid (DMF).

In einer bevorzugten Ausführungsform des erfindungsgemäßen Verfahrens werden Anthrachinone der Formel (Ia) oder (Ib) hergestellt.

Besonders bevorzugt ist die Herstellung von Verbindungen der Formel (I), die der Formel Ia entsprechen, durch Umsetzung von Verbindungen der Formel (IIIa), worin
Z = SO₃M und M die obige Bedeutung besitzt, insbesondere K bedeutet,
mit Diaminen der Formel (IV) bei einer Temperatur von 90 bis 150°C, insbesondere bei 120 bis 150°C in Wasser als Lösungsmittel, wobei die Umsetzung vorzugsweise unter Druck erfolgt. Vorzugsweise erfolgt die Umsetzung in einem Autoklaven. Bevorzugt werden Drucke von 2 bis 6 bar eingestellt.

Besonders bevorzugt erfolgt die Umsetzung bei dieser Verfahrensvariante in Gegenwart eines Oxidationsmittels, beispielsweise Nitrobenzolsulfonsäure in Form eines Alkalisalzes. Dies dient dazu, das bei der Reaktion freiwerdenes Sulfit in Sulfat zu überführen.

Anschließend wird die so hergestellte Verbindung (I) vorzugsweise durch Filtration isoliert, mit heißem Wasser gewaschen und getrocknet.

Ebenfalls bevorzugt ist ein Verfahren zur Herstellung der erfindungsgemäßen Verbindungen der Formel (I), insbesondere der Formel (Ib), dadurch gekennzeichnet, daß man Verbindungen der Formel (III) insbesondere der Formel (IIIb1) und/oder (IIIb2), worin
- Z: für NO₂ oder Cl steht,
mit Diaminen der Formel (IV) bei einer Temperatur von 90 bis 180°C, insbesondere 140 bis 160°C in Gegenwart eines organischen Lösungsmittels umsetzt.

Die so hergestellte Verbindung (I) wird dann vorzugsweise durch Filtration bei Raumtemperatur isoliert, mit Methanol gewaschen und getrocknet.

Vorteilhaft ist es, die Reaktion in Gegenwart von Alkali-Carbonaten wie K₂CO₃, Na₂CO₃ oder -bicarbonaten wie KHCO₃ oder NaHCO₃ ablaufen zu lassen. Als geeignetes Lösungsmittel kommt beispielsweise NMP oder DMF in Frage. Nach beendeter Reaktion wird der Reaktionsmischung vorzugsweise Methanol zugesetzt, die entstandene Verbindung (I) bei Raumtemperatur abfiltriert, mit verdünnter Salzsäure und heißem Wasser gewaschen und getrocknet.

Die Erfindung betrifft weiterhin ein Verfahren zur Herstellung von Verbindungen der Formel (I), insbesondere solche der Formel (Ib), dadurch gekennzeichnet, daß man Verbindungen der Formel (Ic) 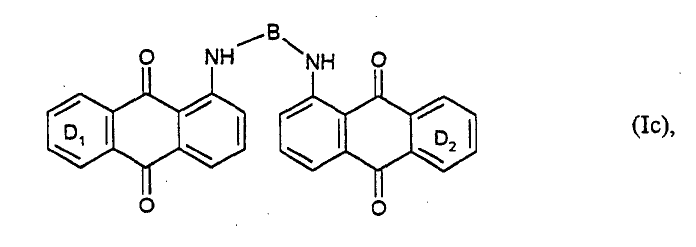 worin
- D₁, D₂ und B: die oben angegebenen Bedeutungen besitzen,
zu Verbindungen der Formel (Id) 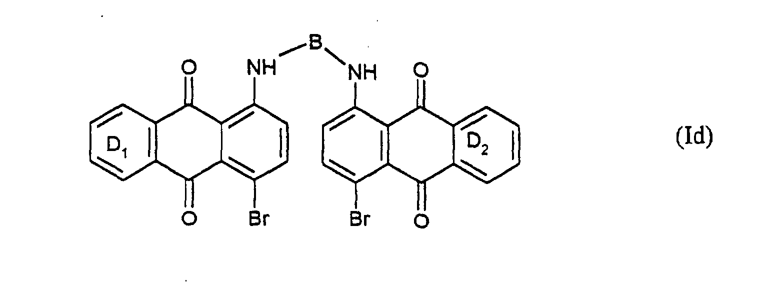 bromiert und diese mit Verbindungen der Formel

NH₂R³ und/oder NH₂R⁴

umsetzt, wobei
- R³ und R⁴: die oben angegebene Bedeutung haben.

Die erfindungsgemäßen Farbstoffe eignen sich hervorragend zum Färben von Kunststoffen in der Masse. Dabei ergeben die Farbstoffe der Formel (Ia) rote und die der Formel (Ib) blaue bis violette Färbungen.

Unter Massefärben werden hierbei insbesondere Verfahren verstanden, bei denen der Farbstoff in die geschmolzene Kunststoffmasse eingearbeitet wird, z.B. unter Zuhilfenahme eines Extruders, oder bei dem der Farbstoff bereits Ausgangskomponenten zur Herstellung des Kunststoffes, z.B. Monomeren vor der Polymerisation, zugesetzt wird.

Besonders bevorzugte Kunststoffe sind Thermoplaste, beispielsweise Vinylpolymere, Polyester, Polyamide sowie Polyolefine, insbesondere Polyethylen und Polypropylen oder Polycarbonate.

Geeignete Vinylpolymere sind Polystyrol, Styrol-Acrylnitril-Copolymere, Styrol-Butadien-Copolymere, Styrol-Butadien-Acrylnitril-Terpolymere, Polymethacrylat, Polyvinylchlorid u.a.

Weiterhin geeignete Polyester sind: Polyethylenterephthalate, Polycarbonate und Celluloseester.

Bevorzugt sind Polystyrol, Styrol-Mischpolymere, Polycarbonate, Polymethacrylate und Polyamide. Besonders bevorzugt ist Polystyrol, Polyethylen und Polypropylen.

Die erwähnten hochmolekularen Verbindungen können einzeln oder in Gemischen, als plastische Massen oder Schmelzen vorliegen.

Die erfindungsgemäßen Farbstoffe werden in feinverteilter Form zur Anwendung gebracht, wobei Dispergiermittel mitverwendet werden können aber nicht müssen.

Werden die Farbstoffe (I) nach der Polymerisation eingesetzt, so werden sie vorzugsweise mit dem Kunststoffgranulat trocken vermischt oder vermahlen und dieses Gemisch z.B. auf Mischwalzen oder in Schnecken plastifiziert und homogenisiert. Man kann die Farbstoffe aber auch der schmelzflüssigen Masse zugeben und diese durch Rühren homogen verteilen. Das derart vorgefärbte Material wird dann wie üblich z.B. durch Verspinnen zu Borsten, Fäden usw. oder durch Extrusion oder im Spritzguß-Verfahren zu Formteilen weiterverarbeitet.

Da die Farbstoffe der Formel (I) gegenüber Polymerisationskatalysatoren, insbesondere Peroxiden, beständig sind, ist es auch möglich, die Farbstoffe den monomeren Ausgangsmaterialien für die Kunststoffe zuzusetzen und dann in Gegenwart von Polymerisationskatalysatoren zu polymerisieren. Dazu werden die Farbstoffe vorzugsweise in den monomeren Komponenten gelöst oder mit ihnen innig vermischt.

Die Farbstoffe der Formel (I) werden vorzugsweise zum Färben der genannten Polymeren in Mengen von 0,0001 bis 1 Gew.-%, insbesondere 0,01 bis 0,5 Gew.-%, bezogen auf die Polymermenge, eingesetzt.

Durch Zusatz von in den Polymeren unlöslichen Pigmenten, wie z.B. Titandioxid, können entsprechende wertvolle gedeckte Färbungen erhalten werden.

Titandioxid kann in einer Menge von 0,01 bis 10 Gew.-%, vorzugsweise 0,1 bis 5 Gew.-%, bezogen auf die Polymermenge, verwendet werden.

Nach dem erfindungsgemäßen Verfahren erhält man transparente bzw. gedeckte brillante rote, violette oder blaue bis blaugrüne Färbungen mit guter Hitzebeständigkeit sowie guter Licht-, Wetter- und Sublimierechtheit.

In das erfindungsgemäße Verfahren können auch Mischungen verschiedener Farbstoffe der Formel (I) und/oder Mischungen von Farbstoffen der Formel (I) mit anderen Farbstoffen und/oder anorganischen bzw. organischen Pigmenten eingesetzt werden.

Die Erfindung wird erläutert, jedoch nicht beschränkt durch die folgenden Beispiele, in denen die Teile gewichtsmäßig angegeben sind, Prozentangaben Gewichtsprozente (Gew.-%) bedeuten.

### Beispiel 1

11,4 g (0,1 Mol) 1,4-Cyclohexandiamin der Formel 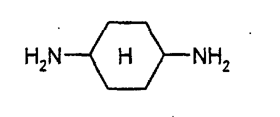 und 48,5 g (0,3 Mol) 1-Chloranthrachinon wurden in 150ml N-Methylpyrrolidon unter Rühren mit 13,8 g Kaliumcarbonat (0,1 Mol) und 0,5 g Cu(II)-acetat versetzt und 5 Stunden lang auf 145 bis 150°C erhitzt. Nach dem Abkühlen wurden 300 ml Methanol zugetropft und der Farbstoff abgenutscht. Dann wurde erst mit Methanol und danach mit heißem Wasser gewaschen und bei 80°C im Vakuum getrocknet. Die Ausbeute betrug 48,3 g = 92 % der Theorie, λₘₐₓ 504 nm.

Der Farbstoff besitzt die Formel

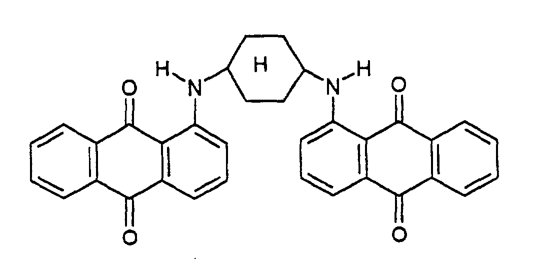

### Beispiel 2

14,2 g (0,1 Mol) 2,5-Dimethyl-1,4-cyclohexandiamin der Formel 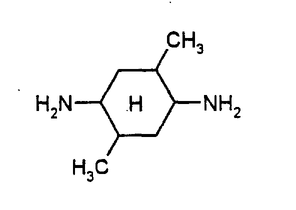 wurden in 150 ml N-Methylpyrrolidon unter Rühren mit 48,5 g (0,2 Mol) 1-Chloranthrachinon und 13,8 g (0,1 Mol) Kaliumcarbonat unter Rühren auf 145 bis 150°C erwärmt und 7 Stunden auf dieser Temperatur gehalten.

Dann wurde die Reaktionsmischung auf Raumtemperatur abgekühlt, mit 300 ml Methanol verdünnt und der auskristallisierte Farbstoff durch Filtration isoliert. Es wurde mit wenig Methanol und dann mit heißem Wasser gewaschen und bei 80°C im Vakuum getrocknet. Die Ausbeute betrug 47 g = 85 % der Theorie, λₘₐₓ 506 nm.

Der Farbstoff hat die Formel

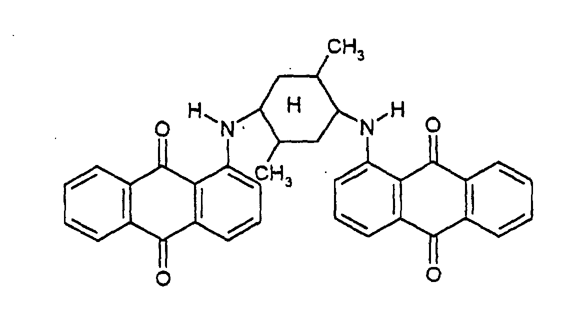

### Beispiel 3

21,0 g (0,1 Mol) Bis-(4-amino-cyclohexyl)-methan der Formel 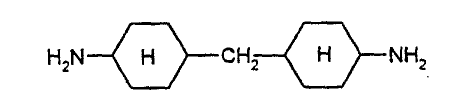 und 48,5 g (0,2 Mol) 1-Chloranthrachinon sowie 13,8 g (0,1 Mol) Kaliumcarbonat wurden in 150 ml N-Methylpyrrolidon unter Rühren auf 145 bis 150°C für 5 Stunden erwärmt. Dann wurde die Reaktionsmischung auf Raumtemperatur abgekühlt, mit 300 ml Methanol verdünnt und der ausgefallene Farbstoff abgenutscht. Es wurde erst mit 100 ml Methanol, dann mit heißem Wasser gewaschen und bei 80°C im Vakuum getrocknet. Die Ausbeute betrug 54,7 g = 88 % der Theorie, λₘₐₓ 514 nm

Der Farbstoff hat die Formel

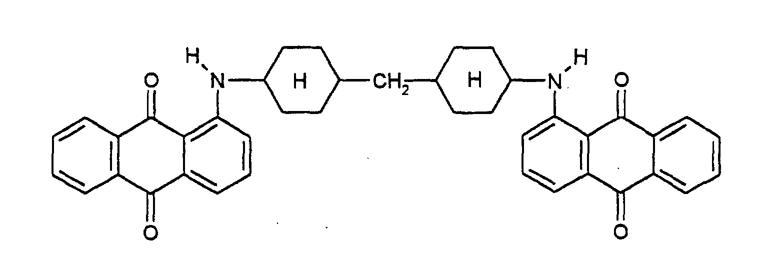

### Beispiel 4

21,0 g (0,1 Mol) Bis-(4-amino-cyclohexyl)-methan der Formel wie in Beispiel 3 angegeben und 54,6 g (0,2 Mol) 1-Nitro-Anthrachinon in 150ml N-Methylpyrrolidon wurden unter Rühren auf 140°C für 4 Stunden erhitzt. Dann wurde die Reaktionsmischung auf Raumtemperatur abgekühlt und mit 300 ml Methanol verdünnt. Der auskristallisierte Farbstoff wurde abfiltriert, erst mit 100 ml Methanol und dann mit heißem Wasser gewaschen und bei 80°C im Vakuum getrocknet. Die Ausbeute betrug 51 g = 82 % der Theorie. Der Farbstoff hat die gleiche Formel wie in Beispiel 3 angegeben.

### Beispiel 5

21,0 g (0,1 Mol) Bis-(4-amino-cyclohexyl)-methan der Formel wie in Beispiel 3 und 65,3 g (0,2 Mol) 1-Anthrachinon-sulfonsaures Kalium sowie 7,4 g 3-Nitrobenzolsulfonsäure, Na-salz (0,033 Mol) und 0,5 g Kupfer(I)chlorid wurden in 300 ml Wasser in einem Autoklaven auf 150°C erhitzt wobei sich ein Druck von ca. 6 bar einstellte. Die Reaktionstemperatur wurde 6 Stunden gehalten. Nach dem Abkühlen auf Raumtemperatur wurde der fertige Farbstoff abfiltriert, erst mit heißem Wasser, danach mit 100 ml Methanol und erneut mit heißem Wasser gewaschen. Nach dem Trocknen bei 80°C im Vakuum erhielt man 49,7 g = 80 % der Theorie an Farbstoff der Formel wie in Beispiel 3.

### Beispiel 6

23,8 g (0,1 Mol) Bis-(4-amino-3-methyl-cyclohexyl)-methan der Formel 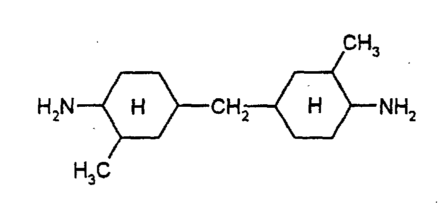 48,5 g (0,2 Mol) 1-Chloranthrachinon und 13,8 g Kaliumcarbonat (0,1 Mol) wurden in 150 ml N-Methylpyrrolidon unter Rühren für 6 Stunden auf eine Temperatur von 145 bis 150°C erhitzt. Danach wurde die Reaktionsmischung auf Raumtemperatur abgekühlt, mit 300 ml Methanol versetzt und der auskristallisierte Farbstoff abfiltriert. Nach dem Waschen mit Methanol und heißem Wasser wurde der Farbstoff bei 80°C im Vakuum getrocknet. Die Ausbeute betrug 52,6 g = 81 % der Theorie, λₘₐₓ 517 nm.

Der Farbstoff hat die Formel

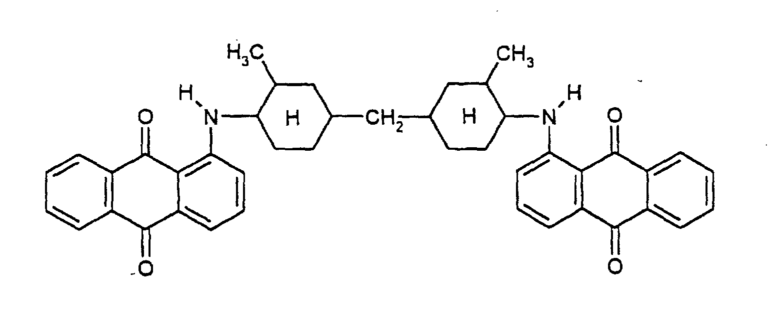

### Beispiel 7

23,8 g (0,1 Mol) 4,4'-Isopropyliden-dicyclo-hexylamin der Formel 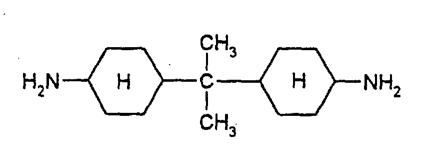 48,5 g (0,2 Mol) 1-Chloranthrachinon und 13,8 g (0,1 Mol) Kaliumcarbonat wurden in 150 ml N-Methylpyrrolidon 6 Stunden bei 150°C verrührt. Nach dem Abkühlen der Reaktionsmischung auf Raumtemperatur wurde mit 300 ml Methanol verdünnt und der ausgefallene Farbstoff abfiltriert. Nach Waschen mit 100 ml Methanol und heißem Wasser wurde der rote Farbstoff im Vakuum bei 80°C getrocknet. Die Ausbeute betrug 53,3 g = 82 % der Theorie, λₘₐₓ 517 nm.

Der Farbstoff hat die Formel

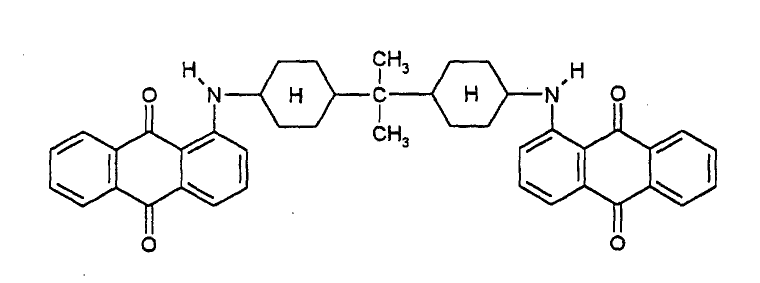

### Beispiel 8

14,2 g (0,1 Mol) eines Isomerengemisches aus 3 (20 %)- und 4 (80 %)-Aminomethyl-1-methyl-cyclohexylamin der Formel 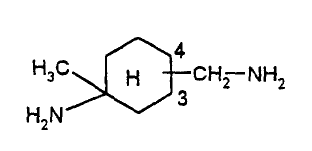 48,5 g (0,2 Mol) 1-Chloranthrachinon und 13,8 g (0,1 Mol) Kaliumcarbonat in 150 ml N-Methylpyrrolidon wurden 6 Stunden bei 150°C gerührt. Nach dem Abkühlen der Reaktionsmischung auf Raumtemperatur und Verdünnen mit 300 ml Methanol wurde der Farbstoff durch Filtration isoliert, danach erst mit 100 ml Methanol und dann mit heißem Wasser gewaschen und bei 80°C im Vakuum getrocknet. Die Ausbeute betrug 46,5 g = 84 % der Theorie, λₘₐₓ 505 nm.

Der Farbstoff besitzt die Strukturformel

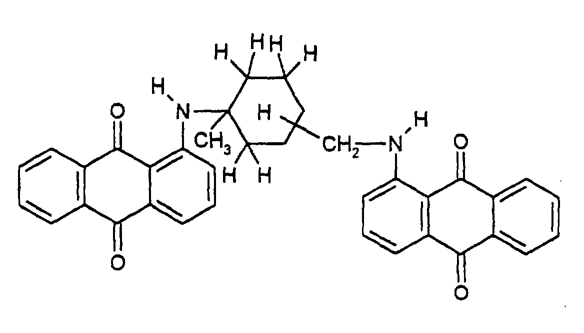

### Beispiel 9

17,0 g (0,1 Mol) 5-Amino-1-aminomethyl-1,3,3-trimethyl-cyclohexan der Formel 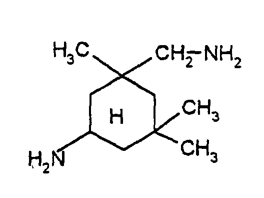 48,5 g (0,2 Mol) 1-Chloranthrachinon und 13,8 g (0,1 Mol) Kaliumcarbonat in 150 ml Dimethylformamid wurden 6 Stunden bei 150°C gerührt. Nach Abkühlen der Reaktionsmischung auf Raumtemperatur und Zusatz von 300 ml Methanol wurde der auskristallisierte Farbstoff abfiltriert, erst mit 100 ml Methanol, dann mit heißem Wasser gewaschen und bei 80°C im Vakuum getrocknet. Die Ausbeute betrug 48,9 g = 84 % der Theorie, λₘₐₓ 506 nm.

Der Farbstoff hat die Formel

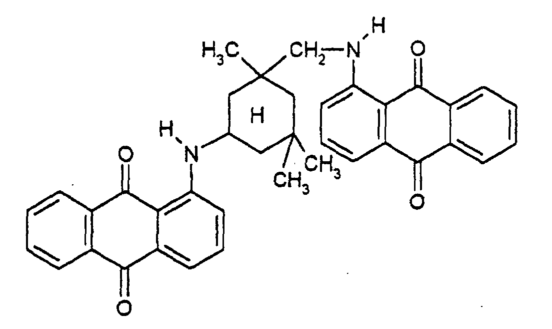

### Beispiel 10

14,2 g (0,1 Mol) 1,4-Diaminomethyl-cyclohexan der Formel 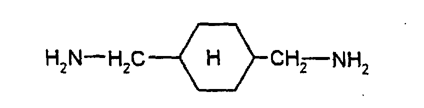 48,5 g (0,2 Mol) 1-Chloranthrachinon und 13,8 g (0,1 Mol) Kaliumcarbonat wurden unter Rühren in 150 ml Dimethylformamid 6 Stunden lang bei einer Temperatur von 145 bis 150°C erhitzt.

Danach wurde die Reaktionsmischung auf Raumtemperatur abgekühlt und mit 300 ml Methanol versetzt. Der auskristallisierte Farbstoff wurde abfiltriert, erst mit 101 ml Methanol und danach mit heißem Wasser gewaschen und bei 80°C im Vakuum getrocknet. Die Ausbeute betrug 44,3 g = 80 % der Theorie.

Der Farbstoff hat die Formel

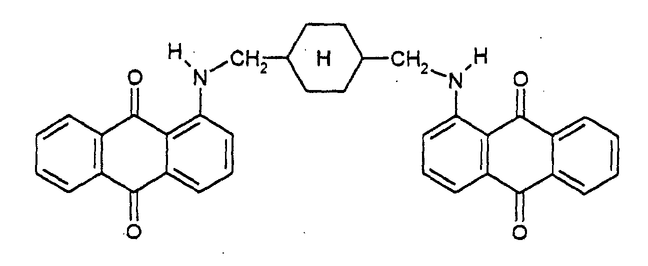

### Beispiel 11

100 g Polystyrol-Granulat und 0,02 g des Farbstoffs aus Beispiel 3 wurden in einem Trommelmischer für 15 Minuten intensiv vermischt. Das trocken angefärbte Granulat wurde bei 240°C auf einer Schneckenspritzgießmaschine verarbeitet. Man erhielt transparente, rote Platten von sehr guter Lichtechtheit. Anstelle von Polystyrol wurden auch Mischpolymerisate mit Butadien und Acrylnitril verwendet. Setzte man zusätzlich 0,5 g Titandioxid zu, so erhielt man farbstarke, gedeckte Färbungen.

### Färbebeispiel 1

100 g Polypropylen-Granulat und 0,1 g des Farbstoffs aus Beispiel 3 wurden in einem Trommelmischer unter Zusatz von einigen Tropfen Propylenglykol als Haftvermittler 15 Minuten lang vermischt. Das mit Farbstoff äußerlich belegte Polypropylen-Granulat wurde dann bei 280°C auf einer Schneckenspritzgußmaschine verarbeitet. Man erhielt transparente rote Platten von sehr guter Lichtechtheit. Die Färbungen zeigen kein Ausbluten. Wenn man dem Farbstoff noch zusätzlich 2 % Titandioxid zufügte, erhielt man farbstarke gedeckte Färbungen.

### Beispiel 12

150 ml o-Dichlorbenzol wurden mit 17,2 g (0,05 Mol) 1-Methoxy-4-(4-methylphenylamino)-anthrachinon, 4,3 g (0,025 Mol) Isophorondiamin und 0,2 g Kupferpulver versetzt und unter Überleiten von Stickstoff 12 Stunden bei 170°C verrührt. Dabei ließ man Methanol und ca. 100 ml o-Dichlorbenzol abdestillieren. Nach dem Abkühlen auf 80°C wurde mit 200 ml Methanol versetzt. Nach dem Abkühlen auf Raumtemperatur wurde der Niederschlag abfiltriert, mit Methanol, Wasser, 10 %iger Salzsäure und wieder mit Wasser nacheinander gewaschen und getrocknet. Man erhielt 16,2 g (82 % d.Th.) des Farbstoffes der Formel

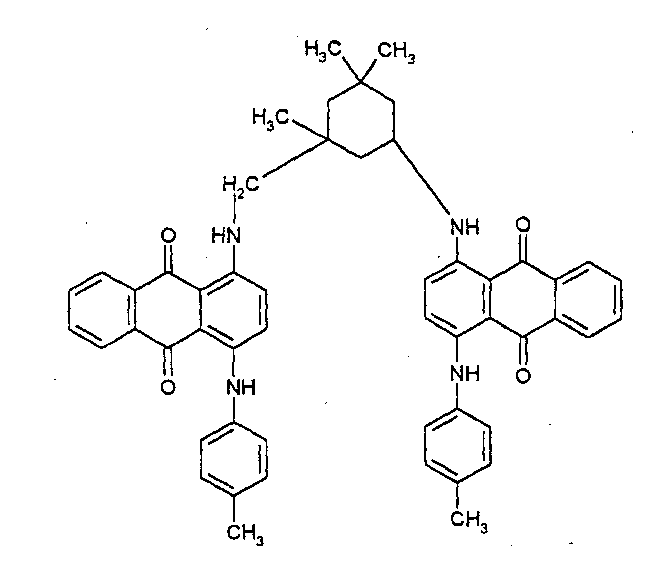

In Kunststoffen wie Polystyrol und Polypropylen erhielt man klare, transparente, grünstichig blaue Färbungen, die bei 300°C temperaturstabil sind, gute Lichtechtheiten besitzen und in der Spritzgußmaschine praktisch keine Sublimation zeigen.

### Beispiel 13

120 ml o-Dichlorbenzol wurden mit 17,2 g (0,05 Mol) 1-Methoxy-4-(4-methylphenylamino)-anthrachinon, 5,25 g 4,4'-Methylenbiscyclohexanamin (0,025 Mol) und 0,15 g Kupferpulver versetzt und unter Stickstoffüberleiten 15 Stunden bei 170°C verrührt. Dabei wurden Methanol und ca. 70 ml o-Dichlorbenzol abdestilliert. Nach Abkühlen auf 90°C wurde mit 150 ml Methanol versetzt und auf Raumtemperatur abgekühlt, der Niederschlag abfiltriert, mit Methanol, Wasser, 10 %iger Salzsäure und wieder mit Wasser gewaschen und getrocknet. Man erhielt 16,2 g (78 % d.Th.) des Farbstoffes der Formel

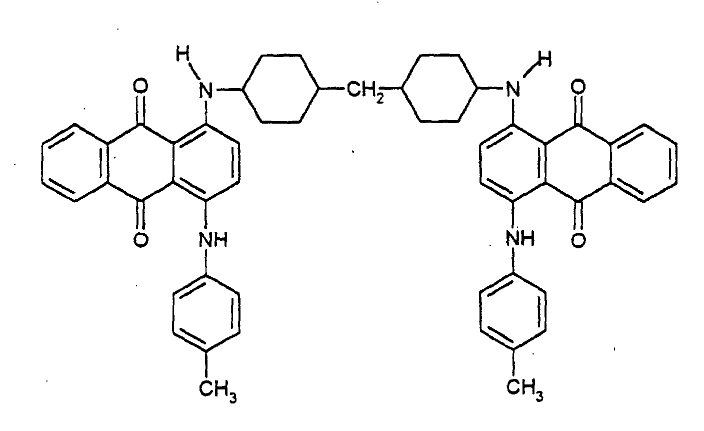

In Kunststoffen wie Polypropylen, Polystyrol, Polycarbonat und Polyethylen eingearbeitet erhielt man transparente grünblaue Färbungen, die in der Spritzgußmaschine bis 300°C stabil sind, praktisch nicht sublimieren und gute Lichtechtheiten aufweisen.

### Beispiel 14

120 ml Ditolylether wurden mit 17,2 g (0,05 Mol) 1-Methoxy-4-(4-methyl-phenylamino)anthrachinon, 5,95 g (0,025 Mol) 4,4'-Methylenbis-(2-methylcyclohexamin), 0,15 g Kupferpulver versetzt und unter Stickstoffüberleiten 20 Stunden bei 170°C verrührt. Dabei wurde Methanol abdestilliert. Nach dem Abkühlen auf 100°C wurden 100 ml n-Butanol zugetropft. Dabei ließ man auf Raumtemperatur abkühlen. Der Niederschlag wurde abfiltriert, mit wenig n-Butanol, mit Methanol, dann Wasser gewaschen und getrocknet. Man erhielt 16,3 g (76% d.Th.) des Farbstoffes der Formel

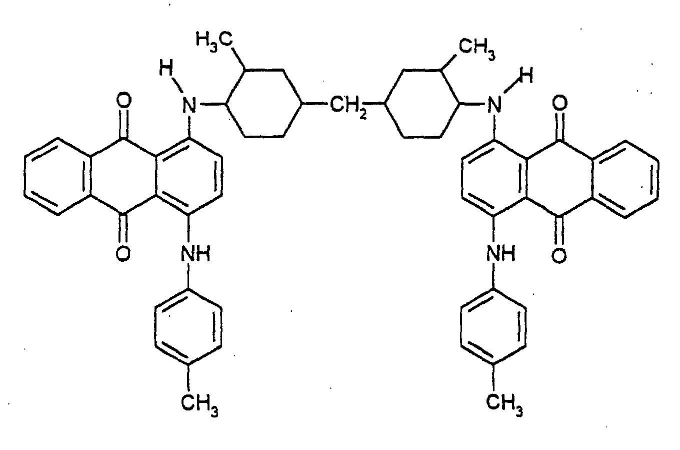

Kunststoffe wie Polystyrol, Polypropylen, Polyethylen und Polycarbonat wurden in transparenten grünstichig blauen Tönen gefärbt. In der Spritzgußmaschine sind die Färbungen bis 300°C stabil, sublimieren praktisch nicht und besitzen gute Lichtechtheiten.

### Beispiel 15

In 100 ml N-Methylpyrrolidon wurden unter Rühren 18,6 g 4-Nitro-1-benzoylaminoanthrachinon (0,05 Mol), 5,25 g 4,4'-Methylenbiscyclohexylamin (0,025 Mol), 7,6 g Kaliumcarbonat (0,055 Mol) und 0,3 g Kupfer(II)acetat eingetragen. Unter Überleiten von Stickstoff wurde 8 Stunden auf eine Temperatur von 100°C erwärmt. Danach wurde das Reaktionsgemisch mit 150 ml Methanol versetzt und der Niederschlag abfiltriert, mit einer Mischung von NMP/Methanol (1:1) gewaschen, mit heißem Methanol und dann mit heißem Wasser gewaschen und im Vakuum getrocknet. Man erhielt einen Farbstoff der Formel

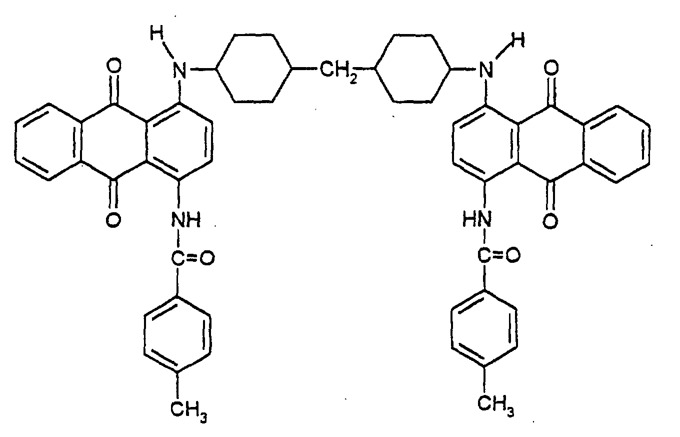

Die Ausbeute betrug 13,1 g (64 % d.Th.). In der Spritzgußmaschine erhielt man bis 300°C stabile, transparente, violette Färbungen in den Kunststoffen Polystyrol, Polypropylen, Polyethylen und Polycarbonat, die sublimierecht sind und eine gute Lichtechtheit aufweisen.

### Beispiel 16

In 150 ml N-Methylpyrrolidon wurden unter Rühren 18,6 g (0,05 Mol) 4-Nitro-1-benzoylamino-anthrachinon, 4,3 g Isophorondiamin (0,025 Mol), 7,6 g Kaliumcarbonat (0,055 Mol) und 0,3 g Kupfer(II)-acetat eingetragen. Unter Überleiten von Stickstoff wurde auf 80 bis 85°C erwärmt und die Reaktionsmischung für 12 Stunden bei dieser Temperatur gehalten. Dann wurde mit 100 ml Methanol versetzt und bei Raumtemperatur der Niederschlag abfiltriert, mit 30 ml N-Methylpyrrolidon in Portionen gewaschen, mit Methanol und dann mit Wasser gewaschen und bei 80°C im Vakuum getrocknet. Man erhielt 12,9 g (63 % d.Th.) eines violetten Farbstoffs der Formel

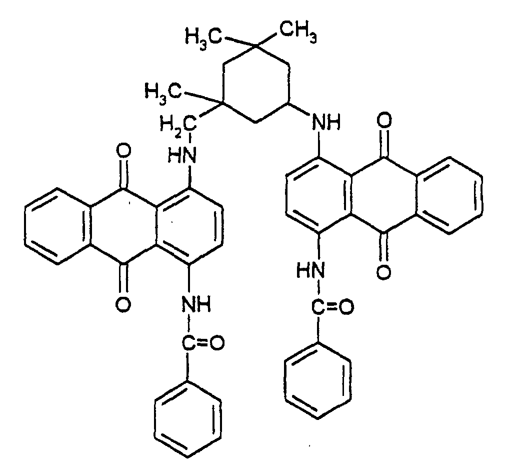

Die Kunststoffe Polystyrol, Mischpolymerisate von Acrylnitril, Butadien und Styrol, Polypropylen sowie Polycarbonat wurden in einer Spritzgußmaschine mit diesem Farbstoff in transparenten Tönen bei Temperaturen bis ca. 300°C gefärbt. Die Färbungen besitzen eine gute Lichtechtheit und sind sublimierecht.

### Beispiel 17

In 150 ml N-Methylpyrrolidon wurden unter Rühren 20,0 g (0,05 Mol) 4-Nitro-1-(4-methyl-benzoylamino)-anthrachinon, 4,3 g Isophorondiamin (0,025 Mol), 7,6 g Kaliumcarbonat und 0,2 g Kupfer(II)-acetat eingetragen und 12 Stunden lang auf 95°C erwärmt. Dann wurden 100 ml Methanol zugetropft und der Niederschlag bei Raumtemperatur abfiltriert, mit 30 ml N-Methylpyrrolidon, mit Methanol und danach mit Wasser gewaschen und getrocknet. Man erhielt in 66%iger Ausbeute (d. th.) den violetten Farbstoff der Formel

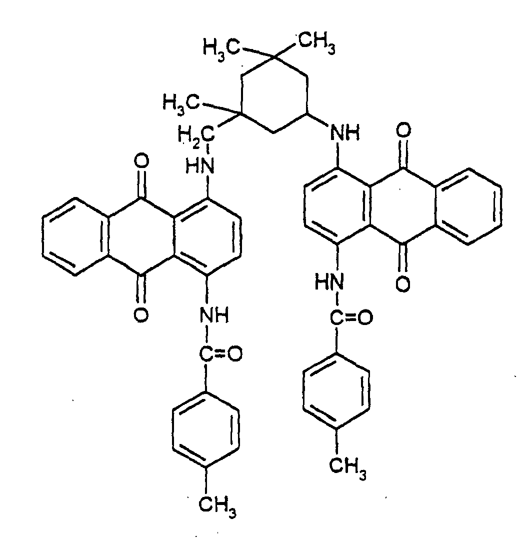

Der Farbstoff färbte Polystyrol, Polypropylen, Polyethylen und Polycarbonat jeweils in transparenten, violetten Tönen, wobei die Färbungen bis 300°C in der Spritzgußmaschine stabil waren. Sie besitzen eine gute Lichtechtheit und sind sublimierecht.

### Beispiel 18

In 150 ml Ethanol wurden unter Rühren 10 g 1-Amino-4-hydroxy-anthrachinon und 2,0 g Leuko-1-Amino-4-hydroxy-anthrachinon (diese beiden Komponenten gemeinsam stellten 0,05 Mol dar) sowie 5,3 g 4,4'-Methylenbiscyclohexylamin, 2 g Hydroxyessigsäure und 0,2 g Borsäure eingetragen. Dann wurde 12 Stunden zum Sieden unter Rückfluß erhitzt. Danach wurden 50 ml n-Butanol zugegeben und die Reaktionsmischung noch 3 Stunden bei 82°C gehalten. Schließlich wurde bei 70°C während 2 Stunden Luft durchgeleitet, noch 6 g KOH-Schuppen zugesetzt und noch 1 Stunde bei 60°C abfiltriert, mit Methanol, dann mit Wasser gewaschen und getrocknet. Nach Umkristallisation aus Eisessig erhielt man 10,1 g (62 % d.Th.) eines rotstichig blauen Farbstoffs der Formel

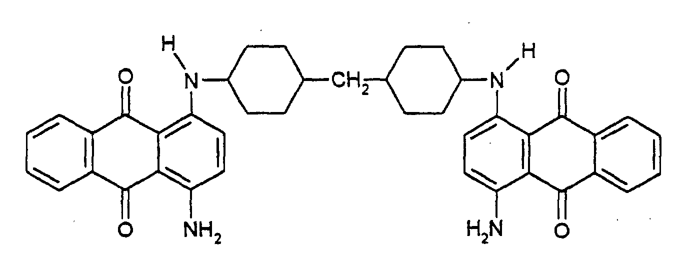

In den Kunststoffen Polystyrol, Polypropylen, Polyethylen und Polycarbonat mit Hilfe einer Spritzgußmaschine eingearbeitet, erhielt man jeweils transparente Färbungen. Die Färbungen besitzen gute Sublimier- und Lichtechtheiten.

### Beispiel 19

120 ml o-Dichlorbenzol wurden mit 17,2 g (0,05 Mol) 1-Methoxy-4-(4-methylphenylamino)anthrachinon, 2,85 g (0,025 Mol) 1,4-Cyclohexyldiamin und 0,1 g Kupferpulver versetzt und unter Überleiten von Stickstoff 9 Stunden bei 170°C verrührt. Dabei ließ man Methanol und ca. 70 ml o-Dichlorbenzol abdestillieren. Nach dem Abkühlen auf 80°C wurden 150 ml Methanol zugefügt und nach dem Abkühlen auf Raumtemperatur wurde der Niederschlag abfiltriert, mit Methanol, mit Wasser, mit 10 %iger Salzsäure und wieder mit Wasser gewaschen und getrocknet. Man erhielt 14,1 g (77 % d.Th.) eines Farbstoffs mit der Formel

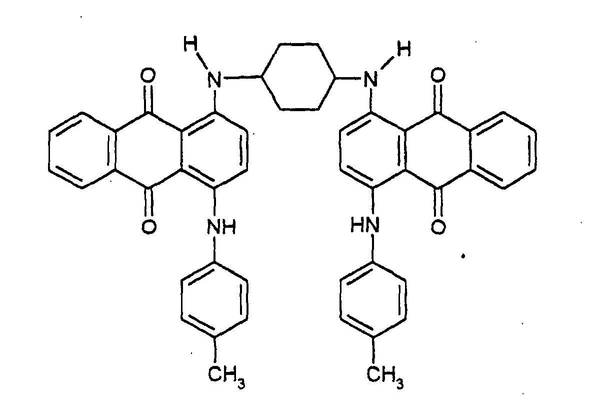

Mit Hilfe eines Extruders wurde der Farbstoff in die Kunststoffe Polystyrol, Polypropylen und Polycarbonat eingearbeitet, wobei man bei Temperaturen von bis zu 300°C blaue, transparente Färbungen erhielt. Die Färbungen besitzen eine gute Sublimier- und Lichtechtheit.

### Färbebeispiel 2

100 g Polystyrol-Granulat und 0,02 g des Farbstoffs aus Beispiel 14 wurden in einem Trommelmischer für 15 Minuten intensiv vermischt. Das trocken angefärbte Granulat wurde bei 240°C auf einer Schneckenspritzgießmaschine verarbeitet. Man erhielt transparente, blaue Platten von sehr guter Lichtechtheit. Anstelle von Polystyrol wurden auch Mischpolymerisate mit Butadien und Acrylnitril verwendet. Setzte man zusätzlich 0,5 g Titandioxid zu, so erhielt man farbstarke, gedeckte Färbungen.

## Patentansprüche

1. Verbindungen der allgemeinen Formel (I)
R¹-NH-B-NH-R² (I),
worin
R¹ und R² unabhängig voneinander einen gegebenenfalls durch OH, gegebenenfalls substituiertes Amino, Aryloxy, Halogen, Alkyl oder Alkoxy substituierten Rest der Formel 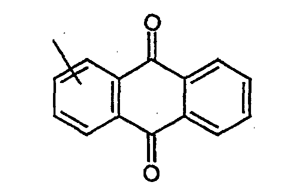 bedeuten und
B für ein gegebenenfalls substituiertes cycloalkylenhaltiges Brückenglied steht.

2. Verbindungen gemäß Anspruch 1, **dadurch gekennzeichnet, daß** die Reste R¹ und R² unsubstituiert sind.

3. Verbindungen gemäß Anspruch 1, die der Formel (Ia) entsprechen

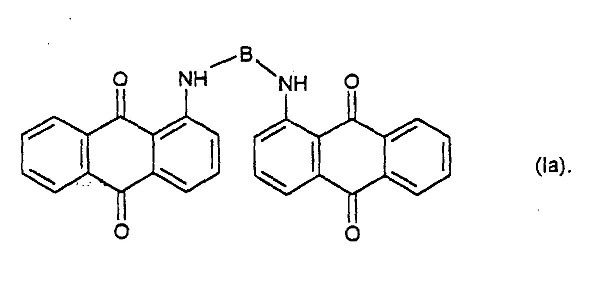

4. Verbindungen gemäß Anspruch 1, die der Formel (Ib) entsprechen 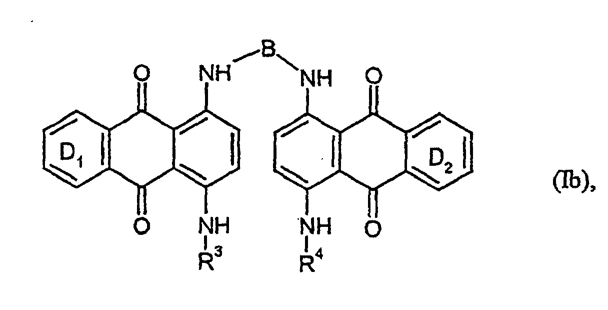 worin
R³ und R⁴ unabhängig voneinander für Wasserstoff, gegebenenfalls substituiertes Alkyl, Aryl oder Aroyl stehen und
die Ringe D₁ und D₂ unabhängig voneinander gegebenenfalls durch Halogen, C₁-C₄-Alkyl oder Acylamino substituiert sind.

5. Verbindungen gemäß Anspruch 4, worin
R³ und R⁴ unabhängig voneinander Wasserstoff, unsubstituiertes oder durch Halogen und/oder Phenyl substituiertes C₁-C₄-Alkyl, unsubstituiertes oder durch Halogen, Alkyl oder Acylamino substituiertes Phenyl oder Benzoyl bedeuten.

6. Verbindungen gemäß Anspruch 4, **dadurch gekennzeichnet, daß** die Ringe D₁ und D₂ unsubstituiert sind.

7. Verbindungen gemäß Anspruch 4, **dadurch gekennzeichnet, daß** die Reste R³ und R⁴ unabhängig voneinander für Wasserstoff, Phenyl, 4-Methylphenyl, Benzoyl und 4-Methylbenzoyl stehen.

8. Verbindungen gemäß Anspruch 1, **dadurch gekennzeichnet, daß** das Cycloalkylen, C₅-C₇-Cycloalkylen, insbesondere Cyclopentyl und 1,3- oder 1,4-Cyclohexylen bedeutet.

9. Verbindungen gemäß Anspruch 1, **dadurch gekennzeichnet, daß** deren Brückenglied B einem Rest der Formel (II) entspricht 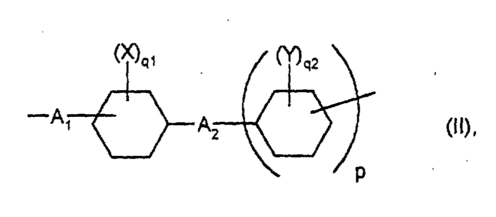 worin
q1 und q2 unabhängig voneinander für eine Zahl von 0 bis 4 stehen,
X und Y unabhängig voneinander Alkyl, insbesondere C₁-C₄-Alkyl oder Halogen, insbesondere Cl, Br und F bedeuten, wobei für q1 größer oder gleich 2 X jeweils gleiche oder verschiedene Bedeutungen annehmen kann und für q2 größer oder gleich 3 Y jeweils gleiche oder verschiedene Bedeutungen annehmen kann,
A₁ für einen linearen oder verzweigten C₁-C₄-Alkylenrest steht, insbesondere 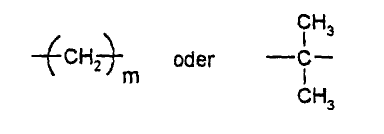 bedeutet,
A2 für einen linearen oder verzweigten C₁-C₄-Alkylenrest steht, insbesondere 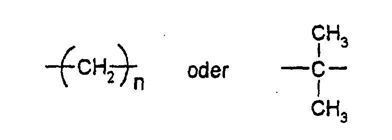 bedeutet, wobei
m und n unabhängig voneinander für eine Zahl von 0 bis 4 stehen und
p 0 oder 1 bedeutet.

10. Verbindungen gemäß Anspruch 1, **dadurch gekennzeichnet, daß** der oder die Cycloalkylenreste im Brückenglied B Cyclohexylenreste sind, die unabhängig voneinander in 1,3- oder 1,4-Stellung verknüpft sind.

11. Verbindungen gemäß Anspruch 1, **dadurch gekennzeichnet, daß** deren Brückenglied B einer der Formeln (IIa) bis (IIe) entspricht: 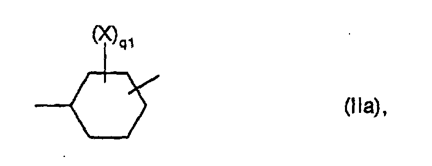 worin
X und q1 die oben angegebene Bedeutung besitzen, vorzugsweise
x für Chlor oder Methyl steht und
q1 für 0 oder 1 steht, 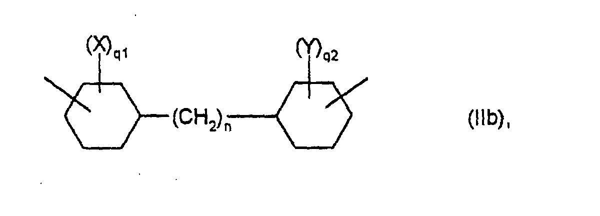
worin
X, Y, q1, q2 und n die oben angegebene Bedeutung besitzen, vorzugsweise '
X und Y jeweils Methyl bedeuten,
q1 und q2 unabhängig voneinander 0 oder 1 bedeuten und
n für 0 oder 1, insbesondere für 1 steht, 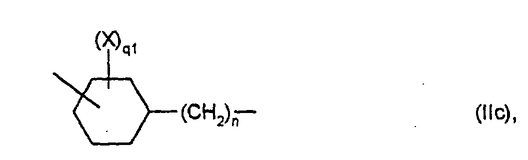
worin
X, q1 und n die oben angegebene Bedeutung besitzen, vorzugsweise
x für Methyl steht,
q1 für 0, 1, 2 oder 3 steht,
n für 1 steht 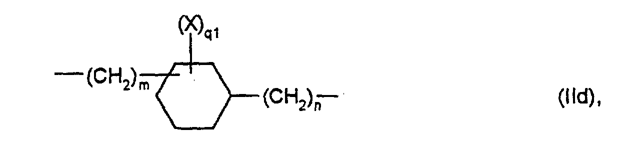
worin
X, q1, m und n die oben angegebene Bedeutung besitzen, vorzugsweise
m und n jeweils 1 bedeuten,
x Methyl bedeutet und
q1 für 0 oder 1 steht, 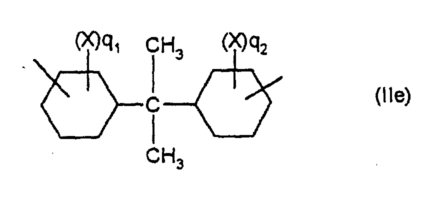
worin
X, Y, q₁ und q₂ die oben angegebenen Bedeutungen besitzen, vorzugsweise
X und Y Methyl bedeuten und
q₁ und q₂ unabhängig voneinander für 0 oder 1 stehen.

12. Verbindungen gemäß Anspruch 1, **dadurch gekennzeichnet, daß** das Brückenglied B eine der nachfolgenden Bedeutungen besitzt:

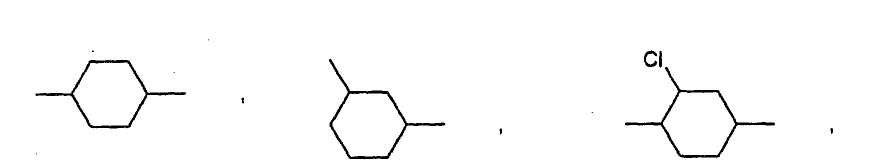

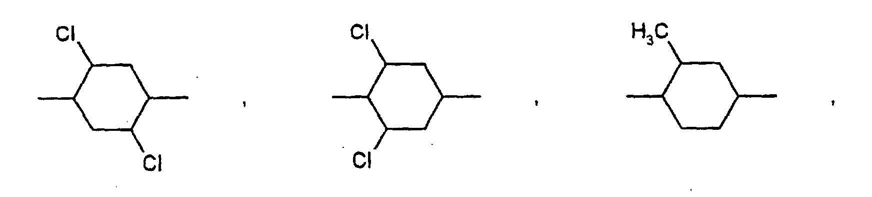

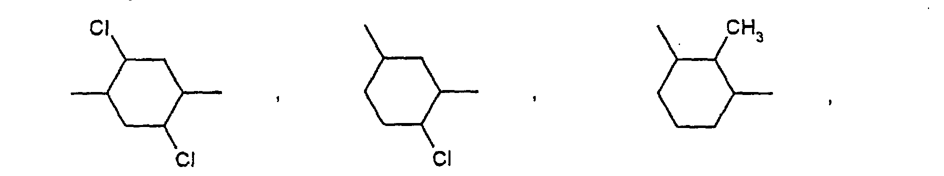

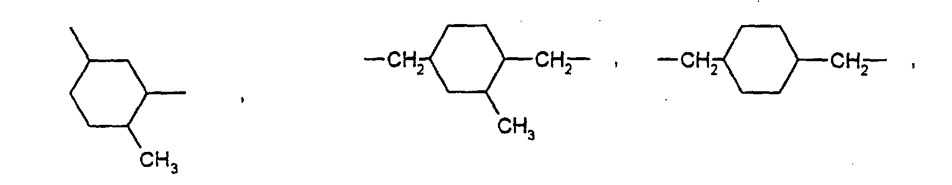

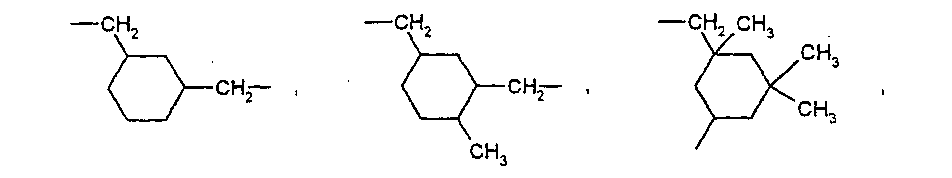

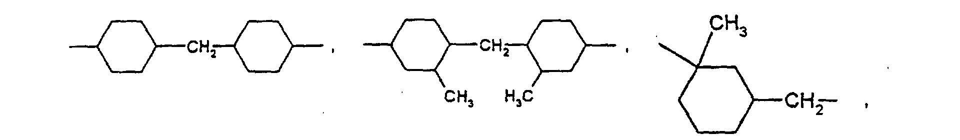

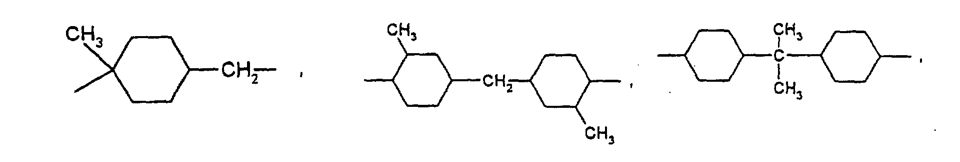

13. Verfahren zur Herstellung von Verbindungen der Formel (I),
R¹-NH-B-NH-R² (I),
worin
R¹ und R² unabhängig voneinander einen gegebenenfalls durch OH, gegebenenfalls substituiertes Amino, Aryloxy, Halogen, Alkyl oder Alkoxy substituierten Rest der Formel 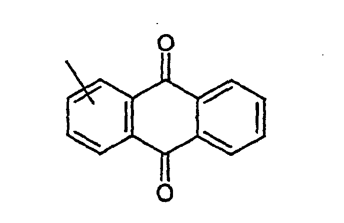 bedeuten und
B für ein gegebenenfalls substituiertes cycloalkylenhaltiges Brückenglied steht.
**dadurch gekennzeichnet, dass** man gegebenenfalls durch OH, gegebenenfalls substituiertes Amino, Aryloxy, Halogen, Alkyl oder Alkoxy substituierte Anthrachinonverbindungen der Formel (III) 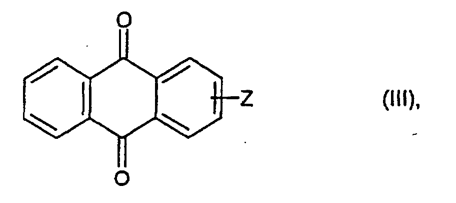 worin
Z für Cl, NO₂ oder SO₃M, mit M = Alkalimetall, insbesondere K oder Na, steht,
mit einem Diamin der Formel (IV)
H₂N-B-NH₂ (IV),
worin
B die oben angegebene Bedeutung hat
bei einer Temperatur von 100 bis 180°C, gegebenenfalls in Gegenwart eines Lösungsmittels umsetzt.

14. Verwendung der Verbindungen gemäß Anspruch 1 zum Massefärben von Kunststoffen.

## Claims

1. Compounds of the general formula (I)
R¹-NH-B-NH-R² (I),
wherein
R¹ and R² independently of one another denote a radical of the formula 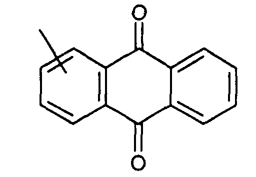 which is optionally substituted by OH, optionally substituted amino, aryloxy, halogen, alkyl or alkoxy,
B represents an optionally substituted cycloalkylene-containing bridge member.

2. Compounds according to Claim 1, **characterized in that** the radicals R¹ and R² are unsubstituted.

3. Compounds according to Claim 1, which correspond to the formula (Ia)

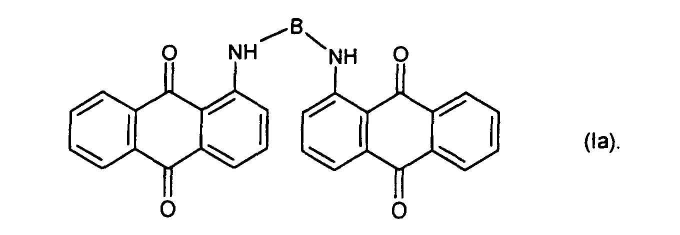

4. Compounds according to Claim 1, which correspond to the formula (Ib) 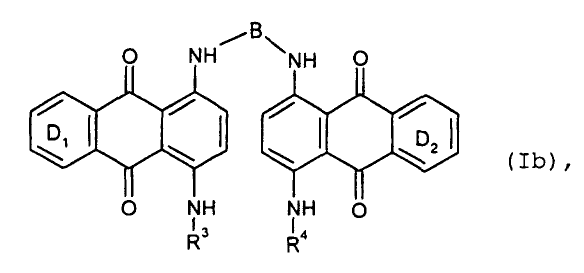 wherein
R³ and R⁴ independently of one another represent hydrogen, optionally substituted alkyl, aryl or aroyl and
the rings D₁ and D₂ independently of one another are optionally substituted by halogen, C₁-C₄-alkyl or acylamino.

5. Compounds according to Claim 4, wherein
R³ and R⁴ independently of one another denote hydrogen, C₁-C₄-alkyl, which is unsubstituted or substituted by halogen and/or phenyl, or phenyl or benzoyl which are unsubstituted or substituted by halogen, alkyl or acylamino.

6. Compounds according to Claim 4, **characterized in that** the rings D₁ and D₂ are unsubstituted.

7. Compounds according to Claim 4, **characterized in that** the radicals R³ and R⁴ independently of one another represent hydrogen, phenyl, 4-methylphenyl, benzoyl and 4-methylbenzoyl.

8. Compounds according to Claim 1, **characterized in that** the cycloalkylene denotes C₅-C₇-cycloalkylene, in particular cyclopentylene and 1,3- or 1,4-cyclohexylene.

9. Compounds according to Claim 1, **characterized in that** their bridge member B corresponds to a radical of the formula (II) 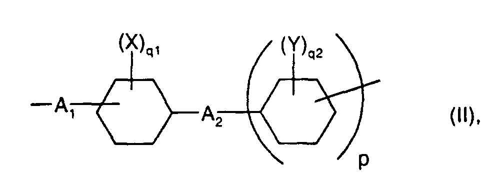 wherein
q1 and q2 independently of one another represent a number from 0 to 4,
X and Y independently of one another denote alkyl, C₁-C₄-alkyl, or halogen, in particular Cl, Br and F, where if q1 is greater than or equal to 2, X can in each case assume identical or different meanings, and if q2 is greater than or equal to 3, Y can in each case assume identical or different meanings,
A₁ represents a linear or branched C₁-C₄-alkylene radical, in particular denotes 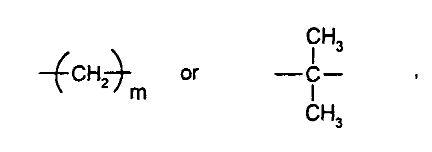
A₂ represents a linear or branched C₁-C₄-alkylene radical, in particular denotes 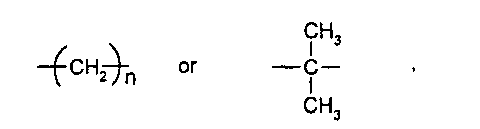 wherein
m and n independently of one another represent a number from 0 to 4 and
p denotes 0 or 1.

10. Compounds according to Claim 1, **characterized in that** the cycloalkylene radical or radicals in the bridge member B are cyclohexylene radicals which independently of one another are linked in the 1,3- or 1,4-position.

11. Compounds according to Claim 1, **characterized in that** their bridge member B corresponds to one of the formulae (IIa) to (IIe): 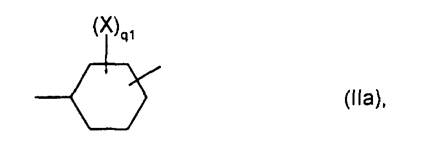 wherein
X and q1 have the abovementioned meaning, preferably
X represents chlorine or methyl and
q1 represents 0 or 1, 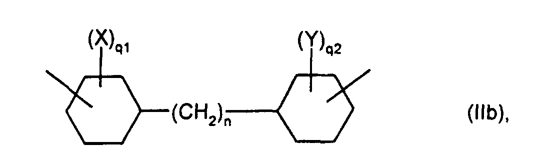
wherein
X, Y, q1, q2 and n have the abovementioned meaning, preferably
X and Y in each case denote methyl,
q1 and q2 independently of one another denote 0 or 1 and
n represents 0 or 1, in particular 1, 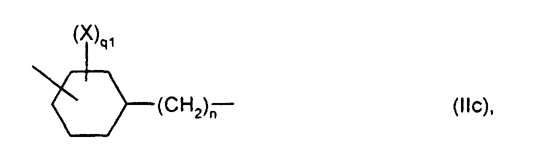
wherein
X, q1 and n have the abovementioned meaning, preferably
X represents methyl,
q1 represents 0, 1, 2 or 3,
n represents 1 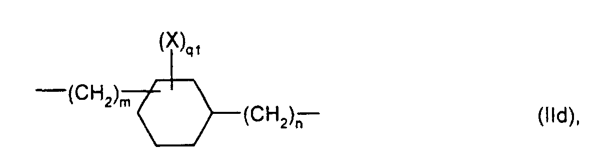
wherein
X, q1, m and n have the abovementioned meaning, preferably
m and n in each case denote 1,
X denotes methyl and
q1 represents 0 or 1, 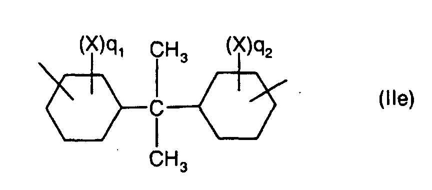
wherein
X, Y, q₁ and q₂ have the abovementioned meanings, preferably
X and Y denote methyl and
q₁ and q₂ independently of one another represent 0 or 1.

12. Compounds according to Claim 1, **characterized in that** the bridge member B has one of the following meanings:

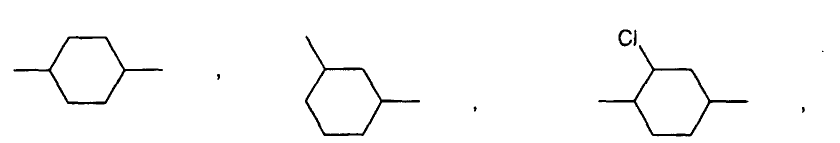

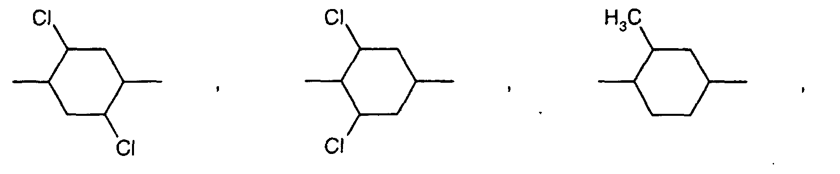

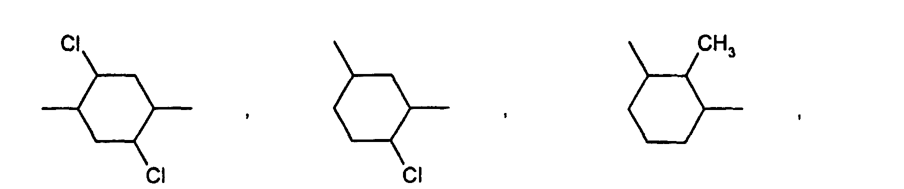

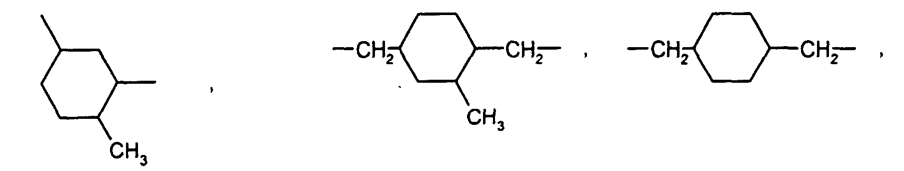

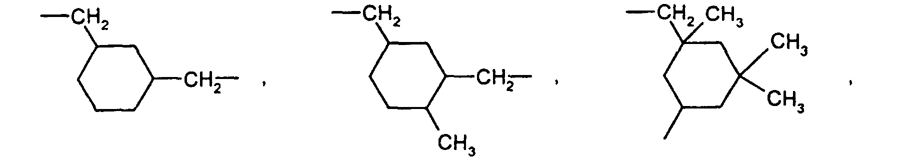

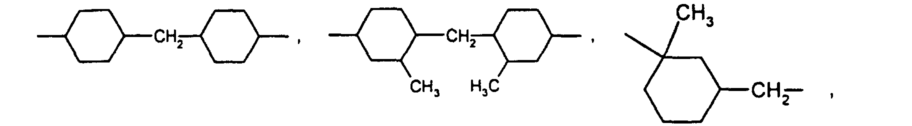

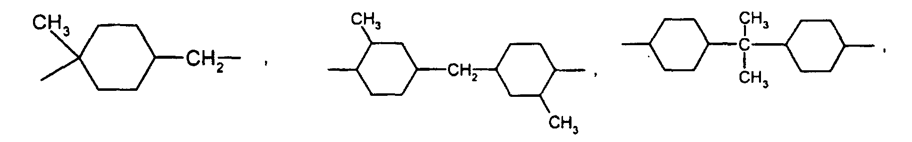

13. Process for the preparation of compounds of the formula (I)
R¹-NH-B-NH-R² (I),
wherein
R¹ and R² independently of one another denote a radical of the formula 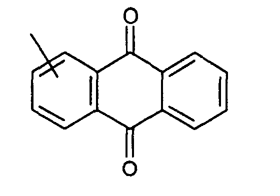 which is optionally substituted by OH, optionally substituted amino, aryloxy, halogen, alkyl or alkoxy, and
B represents an optionally substituted cycloalkylene-containing bridge member,
**characterized in that** anthraquinone compounds of the formula (III) 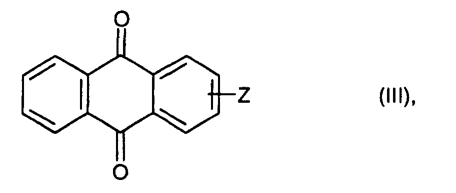 which are optionally substituted by OH, optionally substituted amino, aryloxy, halogen, alkyl or alkoxy, wherein
z represents Cl, NO₂ or SO₃M, where M = an alkali metal, in particular K or Na,
are reacted with a diamine of the formula (IV)
H₂N-B-NH₂ (IV),
wherein
B has the abovementioned meaning
at a temperature of from 100 to 180°C, if appropriate in the presence of a solvent.

14. Use of the compounds according to Claim 1 for bulk dyeing of plastics.

## Revendications

1. Composés de formule générale (I)
R¹-NH-B-NH-R² (I),
dans laquelle
R¹ et R² représentent chacun, indépendamment l'un de l'autre, un radical de formule 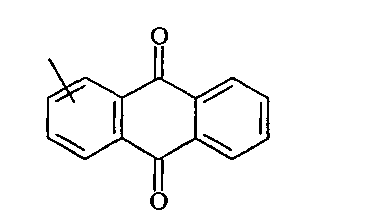 portant éventuellement des substituants OH, amino lui-même éventuellement substitué, aryloxy, halogéno, alkyle ou alcoxy et
B représente un pont contenant un noyau cycloalkylène et éventuellement substitué.

2. Composés selon la revendication 1, **caractérisés en ce que** les radicaux R¹ et R² ne sont pas substitués.

3. Composés selon la revendication 1, répondant à la formule particulière (Ia)

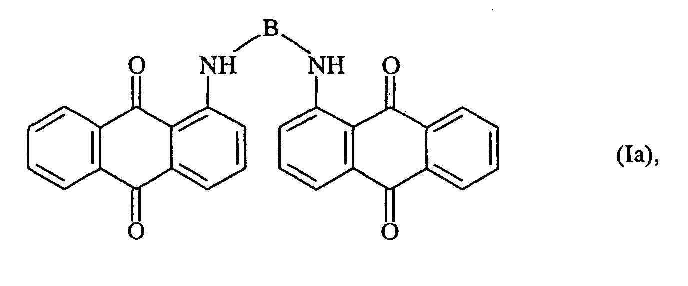

4. Composés selon la revendication 1, répondant à la formule particulière (Ib) 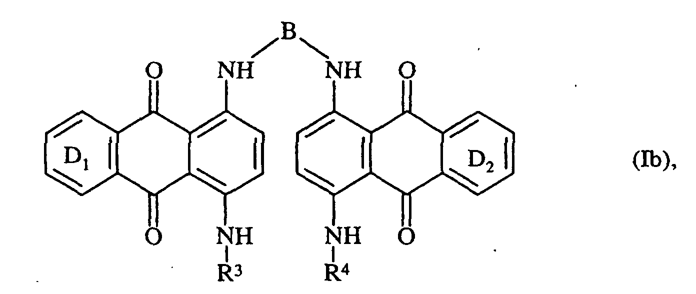 dans laquelle
R³ et R⁴ représentent chacun, indépendamment l'un de l'autre, l'hydrogène, un groupe alkyle, aryle ou aroyle éventuellement substitué et
les noyaux D₁ et D₂ sont éventuellement substitués, indépendamment l'un de l'autre, par des halogènes, des groupes alkyle en C₁-C₄ ou acylamino.

5. Composés selon la revendication 4, pour lesquels
R³ et R⁴ représentent chacun, indépendamment l'un de l'autre, l'hydrogène, un groupe alkyle en C₁-C₄ non substitué ou portant des substituants halogéno et/ou phényle, un groupe phényle ou benzoyle non substitué ou portant des substituants halogéno, alkyle ou acylamino.

6. Composés selon la revendication 4, **caractérisés en ce que** les noyaux D₁ et D₂ ne sont pas substitués.

7. Composés selon la revendication 4, **caractérisés en ce que** les symboles R³ et R⁴ représentent chacun, indépendamment l'un de l'autre, l'hydrogène, un groupe phényle, 4-méthylphényle, benzoyle ou 4-méthylbenzoyle.

8. Composés selon la revendication 1, **caractérisés en ce que** le noyau cycloalkylène est un noyau cycloalkylène en C₅-C₇, plus spécialement cyclopentyle ou 1,3- ou 1,4-cyclohexylène.

9. Composés selon la revendication 1, **caractérisés en ce que** leur pont B est un radical de formule (II) 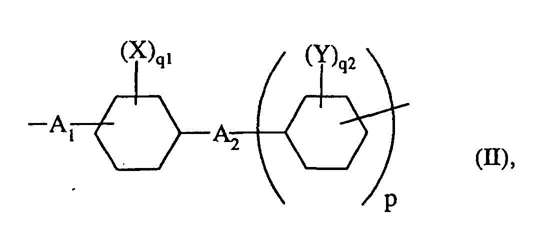 dans laquelle
q₁ et q₂ représentent chacun, indépendamment l'un de l'autre, un nombre allant de 0 à 4,
X et Y représentent chacun, indépendamment l'un de l'autre, un groupe alkyle, plus spécialement alkyle en C₁-C₄, ou un halogène, plus spécialement Cl, Br ou F, les symboles X pouvant avoir des significations ou différentes lorsque q₁ est supérieur ou égal à 2, et les symboles Y pouvant avoir des significations identiques ou différentes lorsque q₂ est supérieur ou égal à 3,
A₁ représente un groupe alkylène linéaire ou ramifié en C₁-C₄, plus spécialement 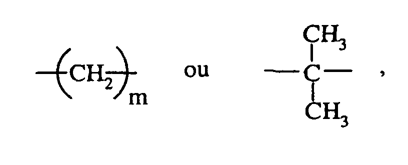
A2 représente un groupe alkylène linéaire ou ramifié en C₁-C₄, plus spécialement 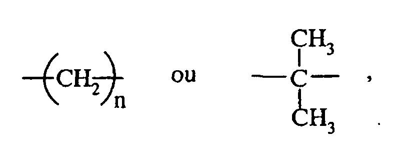
m et n représentent chacun, indépendamment l'un de l'autre, un nombre allant de 0 à 4 et
p est égal à 0 ou 1.

10. Composés selon la revendication 1, **caractérisés en ce que** le ou les noyaux cycloalkylène du pont B sont des noyaux cyclohexylène reliés, indépendamment les uns des autres, en position 1,3- ou 1,4-.

11. Composés selon la revendication 1, **caractérisés en ce que** leur pont B répond à l'une des formules (IIa) à (IIe): 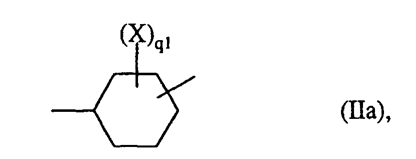 dans laquelle
X et q₁ ont les significations indiquées ci-dessus, mais de préférence
x représente le chlore ou un groupe méthyle et
q₁ est égal à 0 ou 1, 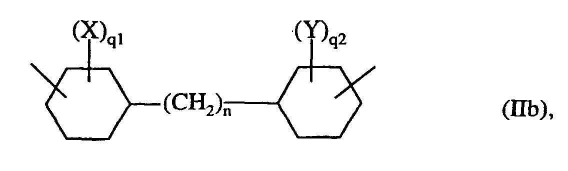
dans laquelle
X, Y, q₁, q₂ et n ont les significations indiquées ci-dessus, mais de préférence
X et Y représentent tous deux des groupes méthyle,
q₁ et q₂ sont égaux chacun, indépendamment l'un de l'autre, à 0 ou 1 et
n est égal à 0 ou 1, plus spécialement à 1, 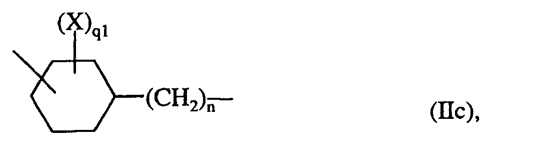
dans laquelle
X, q₁ et n ont les significations indiquées ci-dessus, mais de préférence
x représente un groupe méthyle,
q₁ est égal à 0, 1, 2 ou 3, et
n est égal à 1, 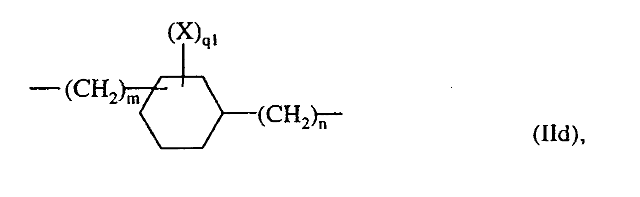
dans laquelle
X, q₁, m et n ont les significations indiquées ci-dessus mais de préférence
m et n sont égaux chacun à 1,
X représente un groupe méthyle et
q₁ est égal à 0 ou 1, 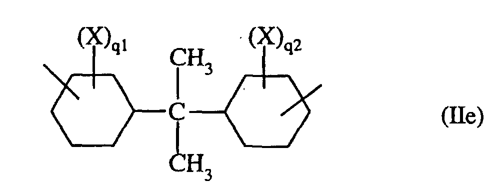
dans laquelle
X, Y, q₁ et q₂ ont les significations indiquées ci-dessus, mais de préférence
X et Y représentent des groupes méthyle et
q₁ et q₂ sont égaux chacun, indépendamment l'un de l'autre, à 0 ou 1.

12. Composés selon la revendication 1, **caractérisés en ce que** le pont B est choisi parmi les suivants :

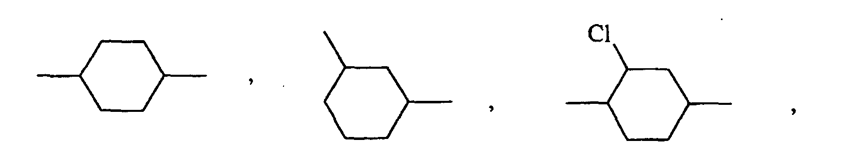

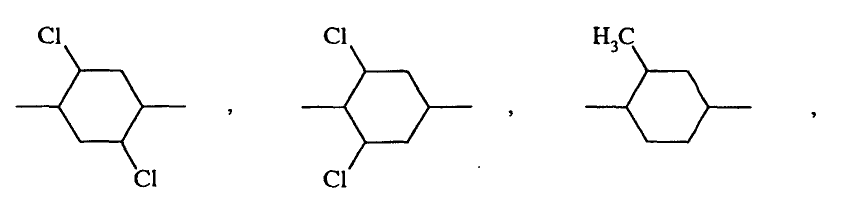

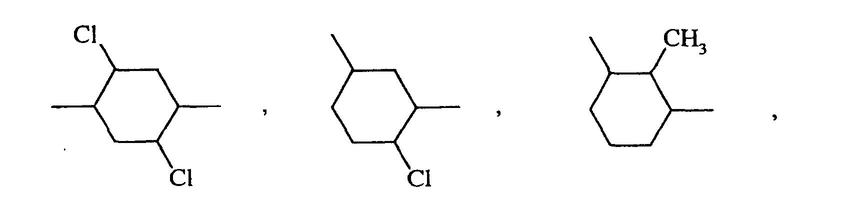

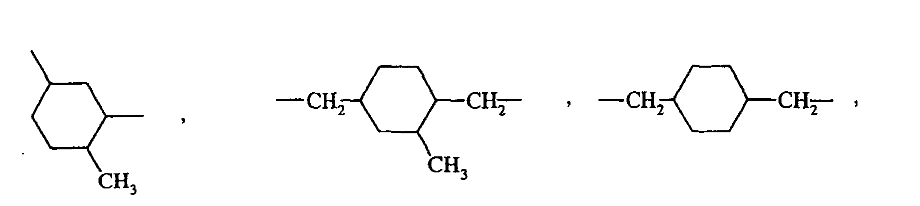

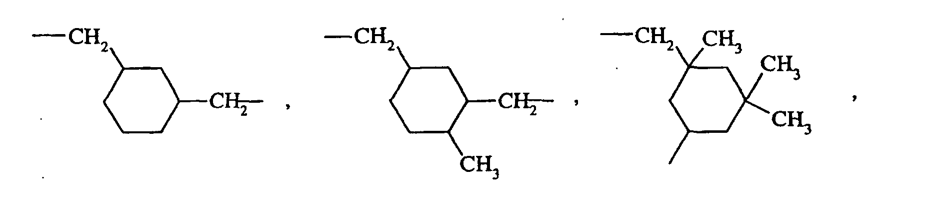

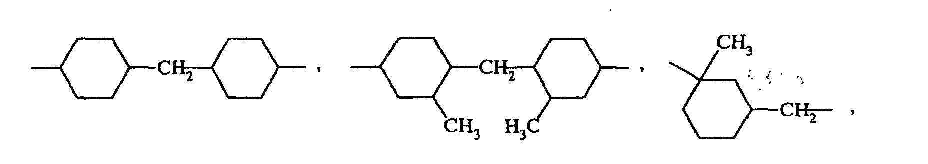

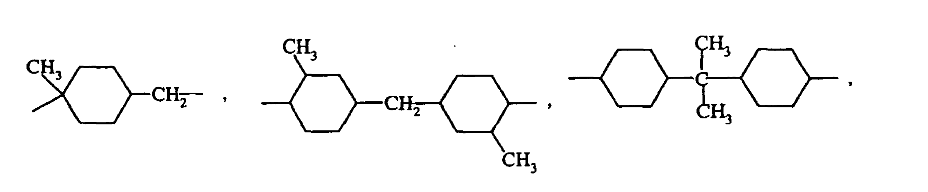

13. Procédé de préparation des composés de formule (I)
R¹-NH-B-NH-R² (I),
dans laquelle
R¹ et R² représentent chacun, indépendamment l'un de l'autre, un radical de formule 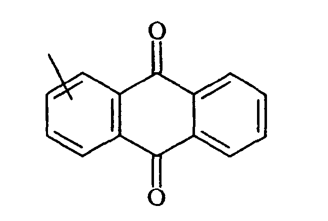 portant éventuellement des substituants OH, amino lui-même éventuellement substitué, aryloxy, halogéno, alkyle ou alcoxy et
B représente un pont contenant un noyau cycloalkylène et éventuellement substitué,
**caractérisé en ce que** l'on fait réagir à une température de 100 à 180°C, éventuellement en présence d'un solvant
des anthraquinones de formule (III) 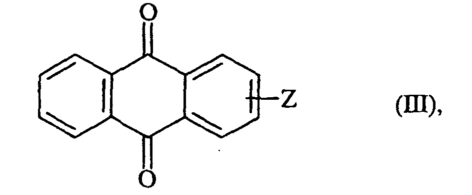 dans laquelle
z représente Cl, NO₂ ou SO₃M avec M = métal alcalin, plus spécialement K ou Na,
portant éventuellement des substituants OH, amino lui-même éventuellement substitué, aryloxy, halogéno, alkyle ou alcoxy,
avec une diamine de formule (IV)
H₂N-B-NH₂ (IV),
dans laquelle
B représente a les significations indiquées ci-dessus.

14. Utilisation des composés selon la revendication 1, pour la coloration de résines synthétiques dans la masse.
